# EUROPÄISCHE PATENTSCHRIFT

(11) **EP 2 786 466 B1**
(45) Veröffentlichungstag und Bekanntmachung des Hinweises auf die Patenterteilung: **25.05.2016**
(21) Anmeldenummer: 12790510.7
(22) Anmeldetag: 13.11.2012
(51) Int. Cl.: H02J 7/00, G01R 31/36

(54) **SCHALTUNGSANORDNUNG SOWIE VERFAHREN ZUR VERMEIDUNG VON TIEFENTLADUNGEN EINES ENERGIESPEICHERS IN EINEM KRAFTFAHRZEUG-BORDNETZ**
CIRCUIT AND METHOD FOR AVOIDING DEEP DISCHARGES OF AN ACCUMULATOR OF A MOTOR VEHICLE
CIRCUIT ET PROCÉDÉ POUR ÉVITER LES DÉCHARGES COMPLÈTES D'UN ACCUMULATEUR DE VÉHICULE À MOTEUR

(30) Priorität: 30.11.2011 DE 102011087488
(43) Veröffentlichungstag der Anmeldung: 08.10.2014
(73) Patentinhaber: Bayerische Motoren Werke Aktiengesellschaft, 80809 München (DE)
(72) Erfinder: PFEIFFER, Christian, 82216 Gernlinden (DE); PRÖBSTLE, Hartmut, 97082 Würzburg (DE)
(86) Internationale Anmeldenummer: PCT/EP2012/072435
(87) Internationale Veröffentlichungsnummer: WO 2013/079310

(56) Entgegenhaltungen:
- EP-A2- 0 650 867
- EP-A2- 1 052 149
- WO-A2-2010/130743
- DE-A1- 10 037 958
- DE-A1- 10 056 795
- DE-A1- 10 300 359
- US-B1- 6 249 106

## Beschreibung

Die Erfindung betrifft eine Schaltungsanordnung zur Vermeidung von Tiefentladungen eines Energiespeichers. Darüber hinaus betrifft die vorliegende Erfindung eine Schaltungsanordnung zur Vermeidung von Startschwierigkeiten eines Kraftfahrzeugs, welche darauf zurückzuführen sind, dass für einen Motorstart nicht genügend Energie aus einem Energiespeicher des Kraftfahrzeugs abgerufen werden kann.

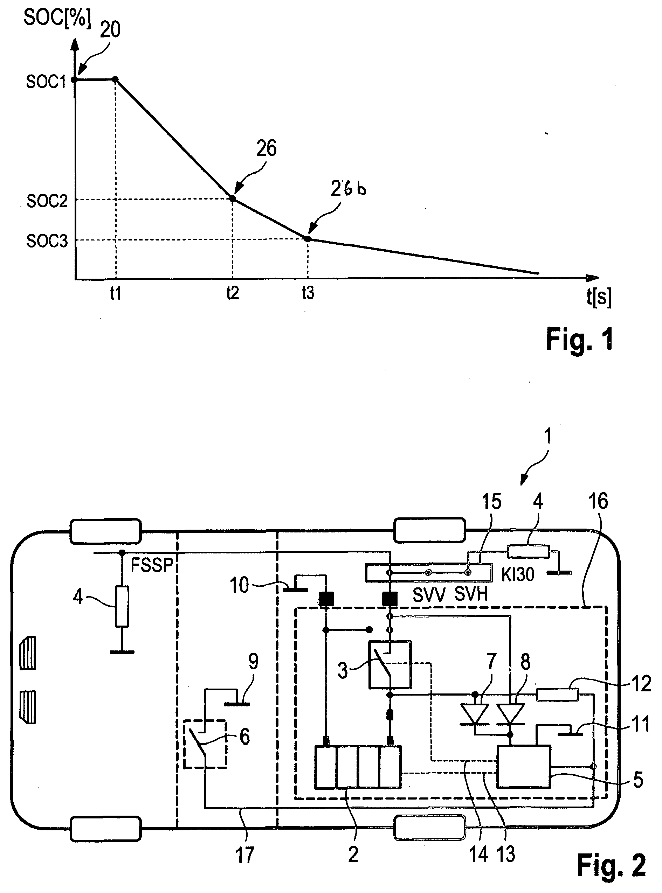

Die zunehmende Ausstattung von Kraftfahrzeugen mit Assistenzsystemen sowie Komfortelektronik und Sicherheitssystemen führt dazu, dass Fahrzeuge auch im geparkten Zustand vermehrt Energie aus dem Energiespeicher ("Fahrzeugbatterie" bzw. "Akkumulator") für den Betrieb der am Fahrzeugbordnetz angeschlossenen elektrischen Verbraucher abrufen. Sofern ein Fahrzeug über mehrere Wochen oder gar Monate abgestellt wird, kann dies dazu führen, dass für einen anschließenden Motorstart nicht mehr ausreichend Energie zur Verfügung steht bzw. eine Tiefentladung des Energiespeichers mit entsprechenden irreversiblen Schäden desselben die Folge ist. Im Stand der Technik sind als Abhilfemaßnahme verschiedene Verfahren bekannt, von denen eine beispielhaft durch das Schaubild der Figur 1 gezeigt wird. Figur 1 zeigt den Ladungszustand eines Akkumulators bzw. einer Fahrzeugbatterie über der Zeit. In einem ersten Ladungszustand SOC1 ("State of Capacity") ist ein Fahrzeug abgestellt worden. Zu einem ersten Zeitpunkt t₁ wird der Motor abgestellt und die Entladung durch Stromverbraucher nach dem Ausschalten der Zündung beginnt. Bei Erreichen eines zweiten Ladungszustands SOC2, wird zu einem zweiten Zeitpunkt t₂ eine Maßnahme ergriffen, um den Ruhestromverbrauch des Fahrzeugs zu reduzieren. Beispielsweise werden bestimmte Routinen in den Ruhestromverbrauchern angepasst, so dass weniger elektrische Energie aus dem Akkumulator abgerufen wird, oder einzelne Verbraucher gänzlich ausgeschaltet. Im Ansprechen darauf nimmt die negative Steigung der Ladungszustandskurve über der Zeit ab. Bei Erreichen eines dritten Ladungszustands SOC3, wird im Zeitpunkt t₃ eine weitere Reduktion der Energieentnahme aus dem Akkumulator dadurch herbeigeführt, dass weitere Ruhestromverbraucher innerhalb des Bordnetzes ausgeschaltet werden bzw. ihre Arbeitsweise weiter angepasst wird. Zwar flacht die in Figur 1 dargestellte Ladungszustandskurve dadurch ein weiteres Mal ab, eine vollständige Entladung des Speichers bzw. ein Abnehmen der Energiereserven unterhalb einer für einen Motorstart notwendigen Energiemenge wird jedoch nicht verhindert.

EP 1 052 149 A2 offenbart ein Verfahren zum Betrieb einer Sicherheitseinrichtung für Kraftfahrzeuge, bei welchem ein Türkontaktschalter beim Öffnen der Tür durch einen Anwender betätigt wird und eine Sicherheitseinrichtung auf diese Weise mit einem Signal versorgt wird, um einen zum Schutz einer Batterie vor Tiefentladung geöffneten Batterietrennschalter motorisch zu schließen. Die Schaltlogik selbst ist vor dem Öffnen der Tür ebenfalls vollständig von der Batterie getrennt.

Zwar existieren neuere. Speichersysteme mit Li-Ionentechnologie, die ein Trennelement zur Abschaltung einer weiteren Energieentnahme ab einem kritischen Ladungszustand beinhalten, jedoch weisen diese deutliche Nachteile auf. So gibt es beispielsweise keine geeignete und komfortable Lösung für eine erneute Fahrzeuginbetriebnahme, nachdem das Trennelement geöffnet wurde und die Batterieüberwachungseinheit im Tiefschlafmodus ist.

Es ist eine Aufgabe der vorliegenden Erfindung, die im Stand der Technik bekannten Nachteile zu beheben und einen zuverlässigen Schutz eines Energiespeichers vor Tiefentladung anwenderfreundlich umzusetzen.

Es ist eine weitere Aufgabe der vorliegenden Erfindung, ein Liegenbleiben eines Fahrzeugs durch für einen Motorstart nicht ausreichende Energiereserven zu verhindern.

### Offenbarung der Erfindung

Die vorstehend genannten Aufgaben werden durch eine Schaltungsanordnung mit den Merkmalen gemäß Anspruch 1 gelöst. Erfindungsgemäß wird eine Schaltungsanordnung zur Vermeidung von Tiefentladungen eines Energiespeichers in einem Kraftfahrzeug-Bordnetz durch an den Energiespeicher angeschlossene, insbesondere vom Klemmen- bzw. Zündungsstatus unabhängige ("zündungsunabhängige" bzw. "Klemme-30"), Verbraucher zur Verfügung gestellt. Als Beispiel für (Klemme-30-) Verbrauche.r, welche auch im abgestellten Zustand des Fahrzeugs noch eine gewisse Aktivität aufweisen können seien insbesondere die Funkschließanlage, Alarmanlage, Bordnetzüberwachungseinrichtungen, Warnblink-Anlage sowie das Parklicht und das Batterie-Steuergerät genannt. Im Rahmen der vorliegenden Erfindung seien unter klemmenunabhängigen Verbrauchern solche elektrischen Komponenten eines Fahrzeug-Bordnetzes verstanden, durch welche auch bei ausgeschalteter Zündung (Klemme "30") bzw. bei abgestelltem Fahrzeug elektrische Energie aus dem Energiespeicher des Fahrzeugs (z.B. Fahrzeugbatterie, Akkumulator) entnommen wird. Erfindungsgemäß umfasst die Schaltungsanordnung weiter einen ersten Schalter zur Trennung des Energiespeichers von zündungsunabhängigen Verbrauchern. Unter einem "ersten Schalter" sei im Rahmen der vorliegenden Erfindung eine Einrichtung verstanden, mittels welcher der elektrische Kontakt zwischen den zündungsunabhängigen Verbrauchern und dem Energiespeicher getrennt bzw. hergestellt werden kann, ohne eine konkrete räumliche Anordnung zu implizieren. Da der elektrische Kontakt zwischen dem Energiespeicher und im Bordnetz vorhandener Verbraucher auch dadurch hergestellt werden bzw. unterbrochen werden kann, dass die Batterie mit der Fahrzeugmasse verbunden bzw. von der Fahrzeugmasse getrennt wird, ist eine Anordnung des ersten Schalters zwischen dem Minuspol und der Fahrzeugmasse ebenfalls möglich und als mögliche Ausführungsform zu verstehen. Weiter umfasst die Schaltungsanordnung eine Erkennungseinrichtung zur Erkennung einer Anwenderpräsenz bzw. eines Anwenderwunsches. Unter einer "Anwenderpräsenz" sei im Rahmen der vorliegenden Erfindung ein solcher Zustand verstanden, in welchem ein Anwender durch Signalisierungsvorrichtungen eines Fahrzeugs durch dieses informiert werden kann und/oder das Fahrzeug bzw. in ihm angeordnete Einrichtungen bedienen kann. Bevorzugt ist diese Erkennungseinrichtung eingerichtet, auch dann noch einen Anwenderwunsch bzw. eine Anwenderpräsenz feststellen zu können, wenn der Energiespeicher des Fahrzeugs mittels des ersten Schalters vom Bordnetz getrennt ist. Alternativ oder zusätzlich kann die Erkennungseinrichtung in ähnlicher Weise eingerichtet sein, einen Anwenderzugriff auf das Fahrzeug zu erkennen. Unter einem "Anwenderzugriff" kann eine Einwirkung des Anwenders von Außen, also beispielsweise das Öffnen einer Tür, insbesondere der Fahrertür, des Kofferraumdeckels oder anderer Zutrittseinrichtungen verstanden werden, durch welche ein Anwender auf das Fahrzeug zugreift bzw. sich Zutritt ("Anwenderzutritt") zum Fahrzeug verschafft. Als Anwenderzugriff bzw. Anwenderpräsenz können daher insbesondere solche Ereignisse gelten, welche vor einem Betätigen von Bedieneinrichtungen innerhalb des Fahrzeugs in Verbindung mit dem Anwender festgestellt werden können. Beispielsweise kann die Erkennungsein richtung eine Bedienung mechanischer Bauteile durch einen Anwender erkennen (Tür, Kofferraum, usw.) und im Ansprechen auf eine solche eine Anwenderpräsenz bzw. einen Anwenderwunsch festzustellen und ein Schließen des ersten Schalters zu veranlassen. Beispielsweise kann ein zweiter Schalter im Türbereich des Fahrzeugs als Erkennungseinrichtung angeordnet sein, welcher durch das Öffnen der Tür des Fahrzeugs automatisch und unmittelbar betätigt wird. Die Erkennungseinrichtung kann dabei beispielsweise einen temporären elektrischen Kontakt herstellen, im Ansprechen worauf ein dem ersten Schalter zugeordnetes Relais kurzzeitig mit Strom versorgt wird und der erste Schalter schließt. Nachfolgend kann eine Versorgung des ersten Schalters mit derjenigen Energie, mittels welchen der elektrische Kontakt durch das Relais erhalten wird, auch durch andere Elemente der Schaltungsanordnung oder beispielsweise durch Selbstversorgung bereitgestellt werden. Erfindungsgemäß ist lediglich entscheidend, dass der erste Schalter (z.B. ein Relais, ein bistabiles Relais o.Ä.) zumindest kurzzeitig durch Veranlassung des zweiten Schalters (z.B. ein Tastschalter, ein Kippschalter, ein kapazitiver Sensor, ein Kraftsensor o.Ä.) geschlossen wird, um anschließend das Bordnetz mit Energie zu versorgen, und einen zur Abwendung einer Tiefentladung des Energiespeichers notwendigen Motorstart vorzubereiten. Alternativ oder zusätzlich kann die Erkennungseinrichtung im Ansprechen auf eine Anwenderpräsenz eine Ausgabe einer Signalisierung an den Anwender des Fahrzeugs veranlassen. Somit kann der Anwender beispielsweise dazu aufgefordert werden, einen Motorstart durchzuführen, um der Tiefentladung des Energiespeichers entgegenzuwirken oder eine externe Energieversorgung des Fahrzeugs (beispielsweise über einen Fremdstart-Stützpunkt, FSSP) herzustellen. Die Signalisierung kann dabei beispielsweise durch eine Anzeige im Kombiinstrument des Fahrzeugs und/oder ein entsprechendes Klangzeichen erfolgen.

Bevorzugt kann die Schaltungsanordnung weiter eine Batterieüberwachungseinheit zur Überwachung des Energiespeichers umfassen. Die Batterieüberwachungseinheit kann beispielsweise eine Funktion zur Überwachung des Ladezustands und/oder zur Feststellung des Alterungszustandes der Fahrzeugbatterie umfassen. Weitere Funktionen der Batterieüberwachungseinheit (auch: "Batteriemanagement-System", BMS), welche in das Gehäuse des die Batterie umfassenden Speichersystems integriert sein kann, können Spannungs-, Strom- und Temperaturmessung und -überwachung sowie Prüfung des Gesundheitszustands der Batterie, Zellüberwachung und Ladungsausgleich (Symmetrierung der Einzelzellen, "Cell balancing") sein. Alternativ oder zusätzlich kann die Batterieüberwachungseinheit auch eingerichtet sein, im Ansprechen auf einen vordefinierten Batteriezustand den ersten Schalter der erfindungsgemäßen Schaltungsanordnung zu betätigen, um den Energiespeicher von zündungsunabhängigen Verbrauchern zu trennen. Weiter kann die Batterieüberwachungseinheit eingerichtet sein, im Ansprechen auf ein Signal von der Erkennungseinrichtung von einem ersten Betriebszustand in einen zweiten Betriebszustand überführt zu werden. Beispielsweise kann der erste Betriebszustand ein Schlafmodus sein, in welchem die Batterieüberwachungseinheit sehr wenig Energie verbraucht, jedoch ein Aufwecken beispielsweise durch ein Bussignal oder ein Spannungssignal auf einer sogenannten Wake-up-Leitung registriert und zur Überführung in einen zweiten Betriebszustand verwendet werden kann. Im zweiten Betriebszustand kann die Batterieüberwachungseinheit beispielsweise grundlegende Funktionen zur Batterieüberwachung durchführen, wie beispielsweise Messen eines Ladungszustandes und/oder Messen einer aktuellen Stromentnahme. Die Batterieüberwachungseinheit kann beispielsweise nach dem "Aufwachen" eine Batterieprüfung vornehmen, im Zuge welcher die oben genannten Maßnahmen vorgenommen werden. Sofern die Batterieüberwachungseinheit hierbei feststellt, dass die Batterie imstande ist, den Anlasser des Fahrzeugs mit hinreichender Wahrscheinlichkeit mit für einen Motorstart notwendiger Energie zu versorgen, kann die Batterieüberwachungseinheit ein Schließen des ersten Schalters veranlassen. Anschließend kann eine Gesamtfahrzeugelektronikprüfung durchgeführt werden und bei positivem Prüfverlauf eine Signalisierung an den Fahrer ausgegeben werden.

Wie weiter oben ausgeführt kann die Erkennungseinrichtung einen zweiten Schalter umfassen, der insbesondere eingerichtet ist, durch das Betätigen einer Tür des Kraftfahrzeugs betätigt zu werden. Der zweite Schalter kann beispielsweise eine sogenannte Wake-up-Leitung der Batterieüberwachungseinheit mit der Fahrzeugmasse verbinden, im Ansprechen worauf ein elektrisches Potential innerhalb der Batterieüberwachungseinheit verändert wird und die Batterieüberwachungseinheit aufwacht. Unter einem "Aufwachen" ist hierbei ein Vorgang zu verstehen, bei welchem die Batterieüberwachungseinhei t aus einem ersten Betriebszustand (Ruhezustand, "Tiefschlafmodus"), in welchem sie eine Leistungsaufnahme von weniger als 1 mA, insbesondere weniger als 100 µA aufweist, in einen zweiten Betriebszustand ("Eingeschaltet", bzw. "in Betrieb") zu überführen. Selbstverständlich könnte bei geeigneter Anordnung des ersten Schalters (beispielsweise im Bereich einer Fahrzeugtür) auch der erste Schalter selbst als Element der Erkennungseinrichtung dafür sorgen, dass beispielsweise durch die Batterieüberwachungseinheit zuvor vom Energiespeicher getrennte klemmenunabhängige ("zündungsunabhängige") Verbraucher wieder mit dem Energiespeicher verbunden werden. Mit anderen Worten würden Funktionen des ersten und des zweiten Schalters in Bezug auf die erfindungsgemäße Schaltungsanordnung in einem Schaltelement miteinander vereint.

Weiter kann die Batterieüberwachungseinheit eingerichtet sein, den ersten Schalter bei Erreichen eines vordefinierbaren Batteriezustandes zu öffnen. Beispielsweise kann die Batterieüberwachungseinheit hierzu den Ladungszustand der Batterie überwachen und bei Verbleiben einer für eine minimale Anzahl von Motorstarts hinreichende Energiemenge dafür sorgen, dass keine weitere Energie aus dem Energiespeicher entnommen wird. Hierzu kann die Batterieüberwachungseinheit - je nach Ausführungsform der Erfindung - auch selbst vom Energiespeicher getrennt werden. Mögliche vordefinierbare minimale Anzahlen von Motorstarts können beispielsweise. 1, 2, 3 oder 4 Motorstarts mit entsprechender Energieentnahmemenge sein. Da ,dem Fachmann bewusst ist, dass die Energiemenge, welche zum Durchführen eines Motorstarts notwendig ist, beispielsweise von der Temperatur des Motors, des Schmiermittels sowie des Energiespeichers , seinem Alterungszustand sowie weiteren chemischen Umständen (z.B. Status der chemischen Sekundärreaktionen) abhängig ist, kann eine entsprechende Sensorik bzw. eine entsprechende Auswertelogik zur Berücksichtigung dieser Umstände in die Batterieüberwachungseinheit integriert werden. Es versteht sich von selbst, dass Steuergeräte wie beispielsweise die Batterieüberwachungseinheit separat integrierte Energiespeicher aufweisen können, durch welche sie längere Standzeiten überdauern und beispielsweise Zugriffsfunktionen überwachen können, als der dem Bordnetz zugeordnete Energiespeicher, dessen Schaltmanagement die vorliegende Erfindung behandelt: Zudem ist es bekannt, Empfangssysteme durch ein Sendesignal mit Energie zu versorgen (z.B. per Induktion nach Art eines RFID-Tags), so dass diese eine Empfangssysteme ohne eigene Energieversorgung auf einen Anwenderzugriff (z.B. per Funkschlüssel) reagieren können. Eine solche Funktion ist auch für die Erkennungseinrichtung der vorliegenden Erfindung möglich.

Zum weiteren Verständnis der Erfindung wird nachfolgend ein Verfahren zur Vermeidung von Tiefentladungen eines Energiespeichers in einem Kraftfahrzeug-Bordnetz durch an den Energiespeicher angeschlossene zündungsunabhängige Verbraucher beschrieben. Das Verfahren umfasst den Schritt eines Erkennens einer Anwenderpräsenz und/oder eines Anwenderwunsches und/oder eines Anwenderzugriffs auf das Fahrzeug. Sowohl für die Anwenderpräsenz als auch für den Anwenderwunsch und den Anwenderzugriff gilt das in Verbindung mit dem vorstehend beschriebenen Erfindungsaspekt einer Schaltungsanordnung' Gesagte entsprechend. Im Ansprechen auf eine erkannte Anwenderpräsenz bzw. einen erkannten Anwenderwunsch und/oder einen Anwenderzugriff auf das Fahrzeug wird erfindungsgemäß eine Signalisierung an einen Anwender des Fahrzeugs ausgegeben. Dies kann beispielsweise eine optische Anzeige innerhalb des Kombiinstruments des Fahrzeugs und/oder eine Ausgabe eines Klangzeichens umfassen. Alternativ oder zusätzlich kann das. Verfahren ein Verbinden des Energiespeichers mit zündungsunabhängigen Verbrauchern umfassen. Letzteres kann beispielsweise durch einen ersten Schalter erfolgen, wie er in Verbindung mit der erfindungsgemäßen Schaltungsanordnung diskutiert worden ist.

Weiter kann das Verfahren einen Schritt des Erkennens eines kritischen Ladungszustands des Energiespeichers umfassen. Der kritische Ladungszustand des Energiespeichers kann beispielsweise ein Verbleiben einer Restenergie für mindestens eine vorbestimmte Zeit (beispielsweise eine Woche, zwei Wochen, drei Wochen) zum Durchführen einer vorbestimmten Anzahl von Motorstarts (1, 2, 3 oder 4) darstellen. Weiter kann das Verfahren ein Trennen des Energiespeichers von zündungsunabhängigen Verbrauchern umfassen.

Generell kann ein Erkennen einer Anwenderpräsenz und/oder eines Anwenderzugriffs auf das Fahrzeug erfindungsgemäß durch eine Zutrittsüberwachung bezüglich des Kraftfahrzeugs erfolgen, so dass ein Bedienen bzw. Passieren von Zutrittseinrichtungen des Fahrzeugs durch einen Anwender zum Feststellen einer Anwenderpräsenz verwendet werden kann und beispielsweise eine entsprechende Signalisierung an die Batterieüberwachungseinheit erfolgt. Beispiele für solche Zutrittseinrichtungen sind Türen und Kofferraumdeckel und deren Bedienung kann ein Betätigen eines Bedienelements, wie z.B. des Türgriffes, des Verriegelungselements (z.B. Türschloss) sowie bereits das Einstecken des Schlüssels in das jeweilige Schloss umfassen.

Erfindungsgemäß kann das Verbinden zündungsunabhängiger Verbraucher mit dem Energiespeicher des Fahrzeugs ein Aktivieren einer Batterieüberwachungseinheit umfassen. Beispielsweise kann im Ansprechen auf das Erkennen einer Anwenderpräsenz bzw. eines Anwenderwunsches und/oder eines Anwenderzugriffs auf das Fahrzeug der Energiespeicher mit Verbrauchern verbunden werden und zeitgleich eine Batterieüberwachungseinheit innerhalb des Fahrzeugs aktiviert werden oder mit anderen Worten "aufgeweckt" werden.

Bevorzugt sind die Verbraucher zündungsunabhängig über den ersten Schalter mit dem Energiespeicher verbindbar. Mit anderen Worten muss die Klemme bzw. die Zündschlüsselstellung keinen Einfluss darauf haben, ob der erste Schalter die zündungsunabhängigen Verbraucher mit dem Energiespeicher verbindet bzw. sie von diesem trennt.

Weiter bevorzugt kann der Energiespeicher einen Lithiumakkumulator umfassen.

Durch die erfindungsgemäßen Aspekte wird eine verbesserte Betriebsstrategie zur Entladung des Speichers bei längeren Standzeiten mit garantierter Ruhestrombegrenzung und garantierter Speicherverfügbarkeit bei erneutem Fahrerwunsch zur Verfügung gestellt.

Weitere Einzelheiten, Merkmale und Vorteile der Erfindung ergeben sich aus der nachfolgenden Beschreibung und den Figuren. Es zeigen:
- Figur 1: eine Strategie zur Steuerung des Ladungszustandes über der Zeit gemäß dem Stand der Technik;
- Figur 2: eine Prinzipskizze eines erfindungsgemäßen Ausführungsbeispiels einer Schaltungsanordnung; und
- Figur 3: eine Strategie zur Steuerung des Ladungszustandes über der Zeit gemäß der vorliegenden Erfindung.

### Detaillierte Beschreibung bevorzugter Ausführungsformen der Erfindung

Figur 2 zeigt eine Prinzipskizze einer erfindungsgemäßen Schaltungsanordnung in einem Fahrzeug 1, in welcher ein Akku 2 als Energiespeicher über einen ersten Schalter 3 mit zündungsunabhängigen Verbrauchern 4 verbunden ist. Der Minuspol des Akkus 2 ist über einen zweiten Masseanschluss 10 mit der elektrischen Fahrzeugmasse verbunden. Der erste Schalter 3 ist über eine Steuerleitung 14 mit einer Batterieüberwachungseinheit 5. verbunden. Die Batterieüberwachüngseinheit 5 ist ihrerseits über eine Sensorleitung 13 mit dem Akku 2 verbunden. Somit ist die Batterieüberwachungseinheit 5 eingerichtet, über die Sensorleitung 13 den Zustand des Akkus 2 zu überwachen und beispielsweise bei Erreichen eines kritischen Ladungszustands des Akkus 2 den ersten Schalter 3 zu öffnen. Die Batterieüberwachungseinheit 5 wird über eine erste Diode 7 vom Akku 2 von der Stellung des ersten Schalters 3 unabhängig mit elektrischer Energie versorgt. Sofern der erste Schalter 3 geschlossen ist, kann eine Energieversorgung der Batterieüberwachungseinheit 5 auch über eine zweite Diode 8 erfolgen. Die Batterieüberwachungseinheit 5 hat einen dritten Masseanschluss 11, über welchen sie mit der Fahrzeugmasse verbunden ist. Zwischen der Batterieüberwachungseinheit 5 und einem ersten Masseanschluss 9 ist im Bereich der Fahrertür des Fahrzeugs 1 ein zweiter Schalter 6 angeordnet. Mit anderen Worten ist der zweite Schalter 6 innerhalb der Wake-up-Leitung 17 angeordnet, deren zwischen dem zweiten Schalter 6 und der Batterieüberwachungseinheit 5 gelegener Teil über einen Widerstand 12 mit dem Pluspol des Akkus 2 verbunden ist. Wird also der zweite Schalter 6 geschlossen, fällt das Potential der Wake-up-Leitung 17 im Bereich der Batterieüberwachungseinheit 5 auf das Potential der Fahrzeugmasse, wird der zweite Schalter 6 geöffnet, befindet sich die Wake-up-Leitung 17 im Bereich der Batterieüberwachungseinheit 5 auf Potential des Pluspols des Akkus 2, da ein Spannungsabfall über dem Widerstand 12 nicht erfolgt.

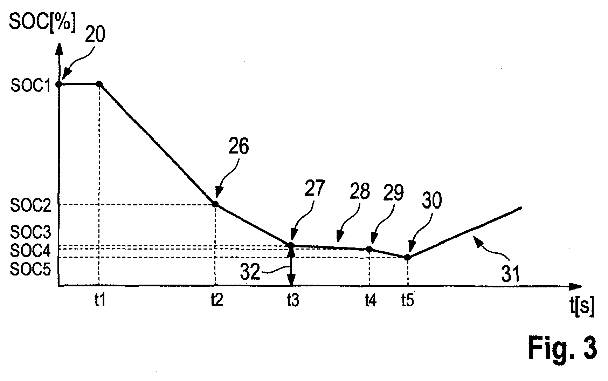

Figur 3 zeigt ein Ausführungsbeispiel einer erfindungsgemäßen Betriebsstrategie für ein elektrisches Speichersystem innerhalb eines Kraftfahrzeug-Bordnetzes gemäß der vorliegenden Erfindung. Wie in Verbindung mit Figur 1 erläutert, wird ein Ladungszustand SOC1 entsprechend einem mittleren Abstell-SOC1 durch das Ausschalten des Kraftfahrzeugmotors ab einem Zeitpunkt t₁ verringert, bis in einem zweiten Zeitpunkt t₂ ein zweiter SOC2 erreicht ist. SOC2 ist als erste Warnschwelle 26 festgelegt worden, im Ansprechen auf deren Erreichung erste Maßnahmen zur Reduktion der Stromaufnahme des Bordnetzes eingeleitet werden. Nach Abschalten dem Akku 2 Energie entziehender Verbraucher 4 reduziert sich die negative Steigung der Energieentnahmekurve zwischen den Zeitpunkten t₂ und t₃ ab. In Zeitpunkt t₃ erreicht der Ladungszustand einen SOC3, der als erfindungsgemäße Abschaltschwelle 27 festgelegt worden ist. Mit anderen Worten öffnet bei Erreichen der Abschaltschwelle 27 der erste Schalter 3 und trennt somit den Akku 2 vom Bordnetz. Es verbleibt noch die durch den Pfeil 32 visualisierte Restenergie, beispielsweise für drei Kaltstarts des Motors, Bis zu einem Zeitpunkt t₄ reduzieren lediglich Selbstentladungsprozesse 28 den Energiegehalt des Akkus 2. Im Zeitpunkt. t₄ erkennt die erfindungsgemäße Erkennungseinrichtung beispielsweise in Gestalt eines zweiten Schalters 6, dass der Anwender des Fahrzeugs die Tür geöffnet hat und somit einerseits präsent ist und andererseits den Wunsch hat, die Fahrt mit dem Fahrzeug zu beginnen. Zur Vorbereitung des Fahrzeugbordnetzes auf die bevorstehende Fahrt verbindet die Batterieüberwachungseinheit 5 die zündungsunabhängigen Verbraucher 4 des Fahrzeugbordnetzes mit dem Akku 2, im Ansprechen worauf die Entladekurve der Figur 3 wieder steiler abfällt. In einem Zeitpunkt t₅ führt der Anwender des Fahrzeugs einen Motorstart 30 durch, im Ansprechen worauf der Generator ("Lichtmaschine") des Fahrzeugs die Ladung des Akkus 2 erhöht und das Bordnetz somit in den normalen Betrieb 31 überführt.

Während im Stand der Technik bekannte Verfahren ein generelles Abschalten der Batterieüberwachungsfunktion im Ansprechen auf das Erreichen einer vordefinierbaren Kapazitätsgrenze des Akkus vorschlagen, und ein Verbinden zündungsunabhängiger Verbraucher mit der Batterie des Fahrzeugs erst im Ansprechen auf ein Betätigen der Zündung des Fahrzeugs erfolgt, wird es durch die erfindungsgemäße Erkennungseinrichtung möglich, zündungsunabhängige Verbraucher, beispielsweise unter Vermittlung einer Batterieüberwachungseinheit, bereits zu einem Zeitpunkt zu wecken und für beispielsweise Informations- und Komfortfunktionen zum Wohle des Anwenders in Betrieb zu nehmen, zu welchem der Anwender noch keine Aktion zum Starten des Kraftfahrzeugmotors vorgenommen hat. Insbesondere bei modernen Fahrzeugen ist der Anwender gewohnt, dass beispielsweise beim Öffnen bzw. Betreten des Fahrzeugs sofort optische Rückmeldungen (Lampen, Beleuchtung, Display-Anzeigen etc.) erfolgen, deren Ausbleiben den Anwender in. Sorge über den Zustand seines Fahrzeugs versetzen könnte. Gegebenenfalls würde ein Anwender sogar Abstand davon nehmen, das Fahrzeug in Betrieb zu nehmen, da er verunsichert ist, ob sich das Fahrzeug in einem verkehrssicheren Zustand befindet bzw. er den Zündschlüssel nach Einstecken in das Zündschloss überhaupt zurückerhalten kann. Erfindungsgemäß wird somit eine Information des Anwenders bzw. ein Vorbereiten eines Fahrzeugs auf einen notwendigen Motorstart zur Vermeidung einer Tiefentladung ermöglicht, um beispielsweise ein Liegenbleiben des Fahrzeugs zu verhindern, ohne den Anwender zu verunsichern bzw. mehr als notwendig auf gewohnte Komfortfunktionen verzichten zu lassen.

### Bezugszeichenliste:

1. Fahrzeug
2. Akku
3. erster Schalter
4. Verbraucher
5. Batterieüberwachungseinheit
6. zweiter Schalter
7. erste Diode
8. zweite Diode
9. erster Masseanschluss
10. zweiter Masseanschluss
11. dritter Masseanschluss
12. Widerstand
13. Sensorleitung
14. Steuerleitung
15. Klemmenschaltung
16. Speichersystem
17. Wake-Up-Leitung
26. erste Warnschwelle
26b zweite Warnschwelle
27. Abschaltschwelle
28. Selbstentladung/ Entladung durch BUE
29. Erkennen Anwenderpräsenz bzw. Anwenderwunsch bzw. Anwenderzugriff
30. Motorstart
31. Normalbetrieb
32. Restenergie

## Patentansprüche

1. Schaltungsanordnung zur Vermeidung einer Tiefentladung eines Energiespeichers (2) in einem Kraftfahrzeug-Bordnetz durch an den
. Energiespeicher (2) angeschlossene Verbraucher (4) umfassend:
- einen ersten Schalter (3) zur elektrischen Trennung des Energiespeichers (2) von Verbrauchern (4),
- eine Batterieüberwachungseinheit (5) zur Überwachung des Energiespeichers (2), und
- eine Erkennungseinrichtung (6) zur Erkennung einer Anwenderpräsenz und/oder eines Anwenderwunsches und/oder eines Anwenderzugriffs auf das Fahrzeug, wobei
- die Batterieüberwachungseinheit (5) von einer Stellung des ersten Schalters (3) unabhängig über eine erste, an einem Pluspol des Energiespeichers (2) angeschlossene Diode (7) mit dem Energiespeicher (2) verbunden ist
- die Erkennungseinrichtung (6) einen zweiten Schalter umfasst und eingerichtet ist, die Batterieüberwachungseinheit (5) im Ansprechen auf ein Schließen des zweiten Schalters aus einem ersten Betriebszustand in einen zweiten Betriebszustand zu überführen, wobei der zweite Schalter in einer Wake-up-Leitung (17) angeordnet ist, in welcher- der zweite Schalter zwischen einem Pluspol des Energiespeichers (2) und der elektrischen Masse (9) angeordnet ist,
- ein Widerstand (12) zwischen dem Pluspol des Energiespeichers (2) und dem zweiten Schalter vorgesehen ist, und
- die Batterieuberwachungseinheit (5) zwischen dem zweiten Schalter und dem Widerstand (12) angeschlossen ist,
wobei die Erkennungseinrichtung (6) eingerichtet ist, im Ansprechen auf eine erfolgte Erkennung
- ein Schließen des ersten Schalters (3), und/oder
- eine Ausgabe einer Signalisierung an den Anwender zu veranlassen.

2. Schaltungsanordnung nach Anspruch 1, wobei
- die Batterieüberwachungseinheit eingerichtet ist, den ersten Schalter (3) zu schließen.

3. Schaltungsanordnung nach Anspruch 1 oder 2, wobei, der zweite Schalter eingerichtet ist, durch das Betätigen einer Tür des Kraftfahrzeugs (1) betätigt zu werden.

4. Schaltungsanordnung nach einem der vorstehenden Ansprüche, wobei die Batterieüberwachungseinheit (5) weiter eingerichtet ist, den ersten Schalter (3) bei Erreichen eines vordefinierbaren Batteriezustandes (SOC3) zu öffnen.

5. Schaltungsanordnung nach einem der Ansprüche 1 bis 4, wobei durch die Erkennungseinrichtung (6) eine Zugriffsüberwachung und/oder eine Zutrittsüberwachung bezüglich des Kraftfahrzeugs (1) erfolgt.

6. Schaltungsanordnung nach einem der Ansprüche 1 bis 5, wobei das Verbinden des Energiespeichers (2) mit den Verbrauchern (4) ein Aktivieren der Batterieüberwachungseinheit (5) umfasst.

7. Schaltungsanordnung nach einem der Ansprüche 1 bis 6, wobei die Verbraucher (4) zündungsunabhängig über den ersten Schalter (3) mit dem Energiespeicher (2) verbindbar sind.

8. Schaltungsanordnung nach einem der Ansprüche 1 bis 7, wobei die Signalisierung eine Aufforderung zum Motorstart umfasst.

## Claims

1. A circuit arrangement for preventing a total discharge of an energy store (2) in a vehicle electrical system by consumers (4) connected to the energy store (2), comprising:
- a first switch (3) for electrically isolating the energy store (2) from consumers (4),
- a battery monitoring unit (5) for monitoring the energy store (2), and
- a detection device (6) for detecting a user presence and/or a user request and/or a user access to the vehicle, wherein
- the battery monitoring unit (5) is connected to the energy store (2) by a first diode (7), connected to a positive terminal of the energy store (2), irrespective of a position of the first switch (3),
- the detection device (6) comprises a second switch and is configured to transfer the battery monitoring unit (5) from a first operating mode into a second operating mode in response to a closure of the second switch, wherein the second switch is arranged in a wake-up line (17) in which the second switch is arranged between a positive terminal of the energy store (2) and the electrical earth (9),
- a resistor (12) is provided between the positive terminal of the energy store (2) and the second switch, and
- the battery monitoring unit (5) is connected between the second switch and the resistor (12),
wherein the detection device (6) is configured in response to a detection which has taken place
- to cause the first switch (3) to close, and/or
- to cause a signalling to be output to the user.

2. A circuit arrangement according to claim 1, wherein
- the battery monitoring unit is configured to close the first switch (3).

3. A circuit arrangement according to claim 1 or claim 2, wherein the second switch is configured to be actuated by actuation of a door of the motor vehicle (1).

4. A circuit arrangement according to any one of the preceding claims, wherein the battery monitoring unit (5) is further configured to open the first switch (3) when a predefinable battery mode (SOC3) has been reached.

5. A circuit arrangement according to any one of claims 1 to 4, wherein an access monitoring procedure and/or an entrance monitoring procedure with regard to the motor vehicle (1) is carried out by the detection device (6).

6. A circuit arrangement according to any one of claims 1 to 5, wherein the connection of the energy store (2) to the consumers (4) comprises an activation of the battery monitoring unit (5).

7. A circuit arrangement according to any one of claims 1 to 6, wherein the consumers (4) can be connected to the energy store (2) by the first switch (3) irrespective of ignition.

8. A circuit arrangement according to any one of claims 1 to 7, wherein the signalling comprises a request to start the engine.

## Revendications

1. Circuit permettant d'éviter une décharge profonde d'un accumulateur d'énergie (2) dans le réseau embarqué d'un véhicule par un consommateur (4) branché sur cet accumulateur d'énergie (2) comprenant :
- un premier commutateur (3) permettant de séparer électriquement l'accumulateur d'énergie (2) de consommateurs (4),
- une unité de surveillance de batterie (5) permettant de surveiller l'accumulateur d'énergie (2), et
- un dispositif d'identification (6) permettant d'identifier la présence d'un utilisateur et/ou un souhait d'un utilisateur et/ou un accès d'un utilisateur au véhicule,
- l'unité de surveillance de batterie (5) étant reliée à l'accumulateur d'énergie (2) indépendamment de la position du premier commutateur (3) par l'intermédiaire d'une première diode (7) branchée sur le pôle positif de l'accumulateur d'énergie (2),
- le dispositif d'identification (6) comprenant un second commutateur et étant réalisé pour pouvoir transférer l'unité de surveillance de batterie (5) en réponse à la fermeture du second commutateur, d'un premier état de fonctionnement dans un second état de fonctionnement, le second commutateur étant monté dans une conduite de veille (17) entre le pôle positif de l'accumulateur d'énergie (2) et la masse électrique (9),
- une résistance (12) étant montée entre le pôle positif de l'accumulateur d'énergie (2) et le second commutateur, et
- l'unité de surveillance de batterie (5) étant branchée entre le second commutateur et la résistance (12),
- le dispositif d'identification (6) étant réalisé pour entraîner en réponse à une identification :
- la fermeture du premier commutateur (3), et/ou
- l'émission d'une signalisation destinée à l'utilisateur.

2. Circuit conforme à la revendication 1,
dans lequel
- l'unité de surveillance de batterie est réalisée pour pouvoir fermer le premier commutateur (3).

3. Circuit conforme à la revendication 1 ou 2,
dans lequel le second commutateur est réalisé pour être actionné par l'actionnement d'une porte du véhicule (1).

4. Circuit conforme à l'une des revendications précédentes,
dans lequel l'unité de surveillance de batterie (5) est en outre réalisée pour ouvrir le premier commutateur (3) lorsqu'a été atteint un état de batterie prédéfini (SOC3).

5. Circuit conforme à l'une des revendications 1 à 4,
dans lequel le dispositif d'identification (6) effectue une surveillance d'accès et/ou une surveillance d'entrée concernant le véhicule (1).

6. Circuit conforme à l'une des revendications 1 à 5,
dans lequel la liaison de l'accumulateur d'énergie (2) et des consommateurs (4) comprend une activation de l'unité de surveillance de batterie (5).

7. Circuit conforme à l'une des revendications 1 à 6,
dans lequel les consommateurs (4) peuvent être reliés à l'accumulateur d'énergie (2) indépendamment de l'allumage par l'intermédiaire du premier commutateur (3).

8. Circuit conforme à l'une des revendications 1 à 7,
dans lequel la signalisation comprend une demande de démarrage du moteur.
